# EUROPEAN PATENT SPECIFICATION

(11) **EP 0 491 475 B1**
(45) Date of publication and mention of the grant of the patent: **28.02.1996**
(21) Application number: 91310840.3
(22) Date of filing: 25.11.1991
(51) Int. Cl.: G11B 15/60, G11B 23/04

(54) **Flexible moving web guide**
Bewegliche flexible Bandführung
Guide pour bande flexible et mobile

(30) Priority: 17.12.1990 US 628503
(43) Date of publication of application: 24.06.1992
(73) Proprietor: INTERNATIONAL BUSINESS MACHINES CORPORATION, Armonk, NY 10504 (US)
(72) Inventor: Albrecht, Thomas Robert, San Jose, CA 95123 (US); Spong, Jaquelin Ketner, Mt. View, CA 94041 (US); Eaton, James Howard, Morgan Hill, CA 95037 (US)
(74) Representative: Burt, Roger James, Dr.

(56) References cited:
- EP-A- 0 072 466
- FR-A- 2 284 546
- FR-A- 2 373 853
- US-A- 3 643 849
- US-A- 3 768 717
- US-A- 3 831 831
- RESEARCH DISCLOSURE. no. 191, March 1980, HAVANT GB page 129; J. E. MORSE: 'WEB EDGE GUIDE'
- IBM TECHNICAL DISCLOSURE BULLETIN. vol. 29, no. 5, October 1986, NEW YORK US pages 2126 - 2127; 'COMPLIANT GUIDE ASSEMBLY WITH HIGH WEAR RESISTANCE CONTACT PADS'

## Description

The present invention relates to flexible moving web guides and particularly, though not exclusively, to guides for tape moving in the path of a tape drive.

Web and tape guiding apparatus are well known. Perhaps the most common use of such an apparatus is for guiding tapes in magnetic tape drives over a magnetic read/write head. Guiding of the tape over the head is critical to the writing of data to and the reading of data from the magnetic tape. A typical magnetic tape drive includes several elements in the tape path to ensure proper alignment and operation of the tape and head. For example, the tape path of the IBM 3480/3490 tape drives includes a supply reel inside a tape cartridge, a vibration decoupler, a cleaner blade, an arcuate supply side air bearing surface, a magnetic read/write head, an arcuate storage side air bearing surface, a tension transducer, a storage reel, and tape edge guides along the sides of the bearing surfaces. The tape guides physically align the lateral position (i.e. in the direction of the tape width) and slope (i.e. the change in height of the tape over the bearing surface) of the tape relative to the read/write head. Lateral positioning maintains proper alignment between the read/write elements of the head and the data tracks on the magnetic tape. Slope control minimises the skew between bits written on the tape and the recording elements of the read/write head. The tape guides are located along the arcuate bearing surfaces because the tape in such proximity can support a larger guiding force without collapsing than can a freely suspended tape.

Different types of edge guides are known. One known type of edge guide is a fixed open channel guide, in which rigid flanges are attached to the tape bearing surfaces. The flanges are fixed in position and physically contact the edge of the tape to align the tape relative to the read/write head. Because the flanges are fixed, the distance between them must be large enough to accommodate the width of the tape, which varies as a result of manufacturing tolerances. To accommodate the maximum width of the tape there must be considerable lateral "play" of the tape between the flanges, resulting in sloppy positioning of the tape and thereby burdening the head servo in maintaining proper alignment between the read/write elements of the head and the data tracks on the magnetic tape.

One type of open channel guide includes a roller with parallel edge guiding flanges. The roller can pivot axially to change the direction of tape movement. The flanges are fixed to the roller, resulting in the aforementioned problems. Examples of pivoting rollers are disclosed in US -A- 4,770,550, US -A- 4,518,134, US -A- 4,403,720, US -A- 4,122,985, US -A- 3,949,919 and US -A- 3,608,796.

An alternative to fixed guides which eliminates the lateral play between the tape and the head is referred to as a "compliant" edge guide. Such a guide uses a leaf spring or other laterally compliant mechanism to maintain the tape in contact with an opposing, fixed edge guide. The compliance of the guide accommodates variations in tape width, as well as variations in tape slope due to imperfect or changing tape path alignment. Examples of compliant guides are disclosed in U.S. -A- 3,317,104, and in the following articles published in the IBM Technical Disclosure Bulletin: Johnson, "Compliant Tape Guide", Vol. 14, No. 2, July 1971, p. 399; Griffiths, "Continuous Compliant Tape Guide", Vol. 15, No. 8, January 1973, p. 2502; Bradley et al., "Web Slitting Device", Vol. 17, No. 7, December 1974, pp. 1860-61; Winarski, "Tape Guiding Analysis", Vol. 24, No. 11b, April 1982, pp. 5776-77; Andresen et al., "Tape Guide Design", Vol. 27, No. 7B, December 1984, pp. 4360-61; Johnson et al., "Antimodal Compliant Tape Guide", Vol. 26, No. 7A, December 1983, p. 3398; Corradini et al., "Tape Guide Assemblies with Weighted Buttons", Vol. 31, No. 3, August 1988, pp. 232-233; Winarski, "Web-Guiding Stress Functions", Vol. 25, No. 4, September 1982, p. 2069; Clegg et al., "Compliant Tape Guide", Vol. 25, No. 2, July 1982, pp. 809-810; Clegg et al., "Air Bearing Tape Guide", Vol. 25, No. 1, June 1982, pp. 447-48; Andresen et al., "Tape Tension Control", Vol. 25, No. 1, June 1982, pp. 444-46.

Perhaps the most well known of the compliant tape guides is shown in Garcia et al., "Compliant Guide Assembly with High Wear Resistance Contact Pads", Vol. 25, No. 5, October 1986, pp. 2126-27, which discloses the laterally compliant tape guides used in the IBM 3480/3490 tape drives. These compliant guides include wear resistant contact pads made from a material such as ferrite or alumina to prevent them from abrading and thereby contaminating the tape drive. The pads are mounted at the ends of stainless steel leaf springs such that the pads are adjacent the arcuate bearing surfaces to engage the edge of the tape as it passes thereover, and to gently urge the tape into proper lateral position.

US-A- 3 768 717 discloses a guide for a moving web according to the precharacterising portion of Claim 1. The plate of this guide pivots around a fixed fulcrum.

A heretofore unrecognised problem with both fixed and compliant edge guides is their inability to comply with changes in the slope of the tape caused by alterations in the tape path, such as a wobbling tape reel. More specifically, if the guiding flange or contact pad does not lie in the plane formed by the arc of the tape edge over the bearing surface, contact between the tape edge and the flange may occur at a single point rather than along the entire span of the guide. Single point contact concentrates the stress on the tape and may result in tape wear and the generation of particulate matter. Such particulate matter in the tape path abrades the magnetic head, resulting in a loss of signal amplitude and separation of the head and tape (referred to as "dropout").

The invention seeks to provide an improved web guiding mechanism.

In particular, this invention seeks to provide a compliant guiding mechanism for flexible tapes which accommodates changes in tape width and other parameters affecting the tape path, such as misalignment of tape path components due to manufacturing tolerances, distortions in the tape, etc.

This invention also seeks to provide a compliant guiding mechanism for flexible tapes which minimises the generation of particulate matter.

Accordingly, the invention provides a gimbaled compliant guide. In one embodiment, the guide includes two plates mounted adjacent opposite edges of an arcuate surface. Both plates are pivotably mounted to accommodate variances in the tape path resulting from tape path tolerances and tape distortions. One plate is also mounted on a leaf spring to accommodate variations in tape width. The other plate pivots about a fixed point. The combination of simple compliancy and the ability to pivot eliminates the concentration of stress at a single contact point between the tape edge and the guiding mechanism. By evenly distributing the stress along the span of contact between the guide and the edge of the tape, particulate matter generated from such contact is minimised. Such guiding mechanism may be used on any element in the tape path.

The scope of the present invention is defined by the appended claims; and how it can be carried into effect is hereinafter particularly described with reference to the accompanying drawings, in which:-.
Figure 1 is a diagrammatic side view of a tape guide according to the invention;
Figure 2 is a top plan view of the guide of Figure 1; and
Figure 3 is a top plan view of the tape path of a tape drive including two guides according to the invention.

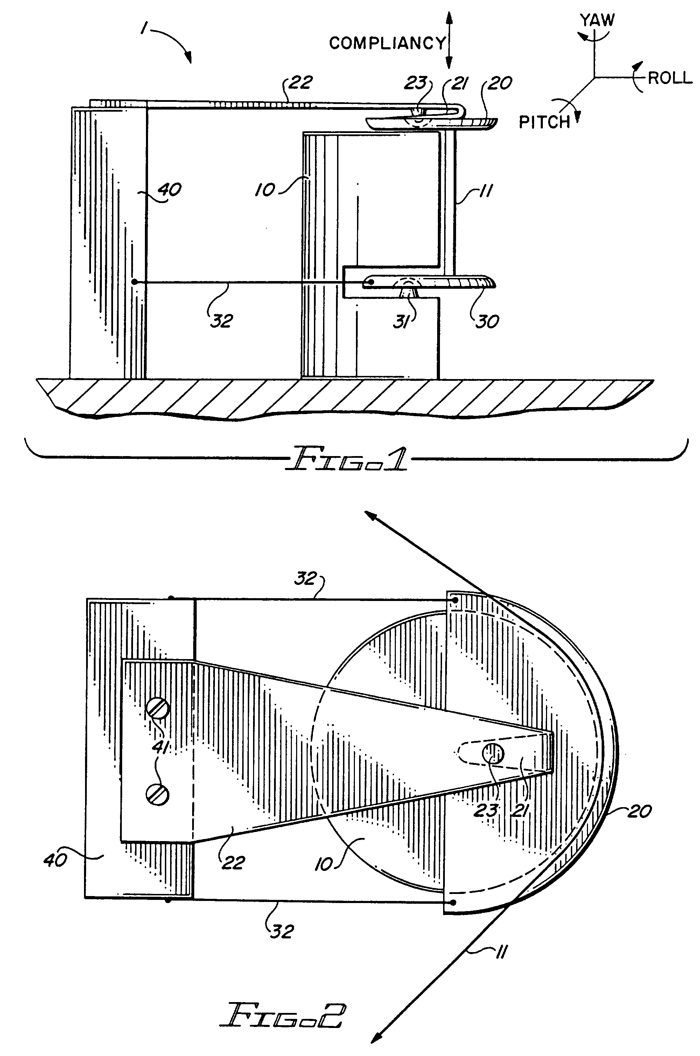

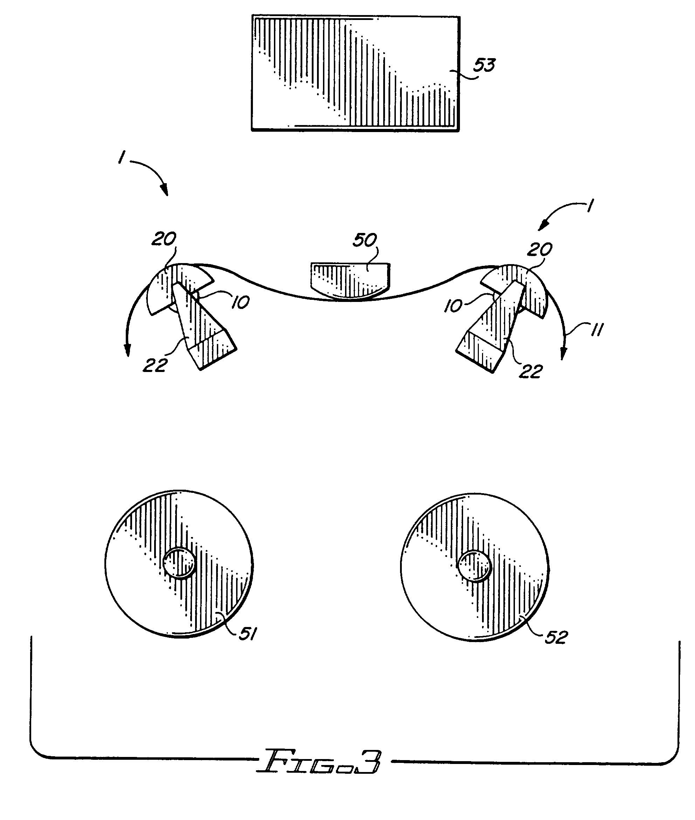

In an exemplary embodiment of the invention, a tape guide 1 (Figs. 1 and 2) includes a cylindrical (or otherwise curved surface) post 10 which provides an arcuate bearing surface for tape 11. Guide 1 also includes an upper plate 20 and lower plate 30 for edge guiding tape 11 by contact therewith. Plates 20 and 30 are manufactured from wear-resistant materials such as ferrite or alumina ceramics, stainless steel, or other materials to minimise the generation of particulate matter. The wear of plates 20 and 30 is also reduced by rounding the edges thereof which may contact the tape.

Upper plate 20 is mounted on a flexure portion 21 of a leaf spring 22 which is in turn fastened to a mount block 40. Leaf spring 22, including flexure 21, is made of thin gauge stainless steel for adequate resilience. Flexure 21 is shown as an integral tip part of leaf spring 22 bent back and under the main part, but could be manufactured separately and attached thereto by spot welding. As shown, leaf spring 22 is fastened to mount block 40 by threaded screws 41, but such fastening could also be achieved using epoxy adhesives, spot welds, or other securing techniques. Guide 1 is made compliant by leaf spring 22 allowing upper plate 20 to move toward or away the edge of tape 11. In normal use, upper plate 20 is in contact with the edge of tape 11 to urge gently the tape into proper alignment in the tape path. Such compliancy accommodates variations in the width of tape 11 resulting from manufacturing tolerances.

The upper plate 20 is permitted to pivot (or "gimbal") with two degrees of freedom labelled as pitch and roll with respect to post 10. Pivoting occurs about a dimple 23 protruding from the lower surface of leaf spring 22, through an opening in flexure 21, and into a recessed region of upper plate 20. As shown, dimple 23 is exaggerated for clarity of detail. Leaf spring 22 prevents rotational motion of upper plate 20 in the plane defined by the arc of the edge of tape 11, labelled as yaw.

The mechanism including upper plate 20, flexure 21, leaf spring 22, and pivot 23 is similar to the IBM 3380/3390 Direct Access Storage Devices (DASD) head suspension assembly. The major difference between the tape guide and the head suspension assembly is that in the head suspension assembly, upper plate 20 is a slider for flying the magnetic head above the surface of a magnetic disk. The head suspension assembly of the IBM 3380/3390 DASD, is disclosed in US -A- 4,167,765 and Aoyagi et al., "Integrated Head Suspension Assembly", IBM TECHNICAL DISCLOSURE BULLETIN, Vol. 32, No. 3A, August 1989, pp. 175-176.

Lower plate 30 is also mounted to pivot with two degrees of freedom. Lower plate 30 is pivoted about a polished, stainless steel ball bearing, pin, or jewel 31 mounted in a recess of post 10 with an epoxy adhesive. Jewel 31 protrudes into a recess in the lower surface of lower plate 30. Two constraint ties 32 limit rotational motion of lower plate 30. Ties 32 are threads or strings of a sturdy material affixed to lower plate 30 and mount block 40 using an epoxy adhesive, spot welding, physical knotting, or other securing technique. In alternative embodiments, ties 32 may extend from lower plate 30 to post 10, or may be replaced by other motion limiting means. Ties 32 are loose enough to allow for pitch and roll of lower plate 30, while limiting yaw.

The ability of plates 20 and 30 to pivot allows guide 1 to accommodate variations in the planes formed by the upper and lower edges of tape 11 yet still maintain contact with tape 11 across its entire length, evenly distributing the force applied across the span of contact with the tape. Plates 20 and 30 remain substantially parallel to the edges of tape 11 and to each other, and are mounted to pivot at the centroid of force of contact with such tape. The centroid of force is the centroid of the arc of contact between the edges of tape 11 and plates 20 and 30. Such application of force results in an even distribution of force along the span of contact between the edges of tape 11 and plates 20 and 30. Plates 20 and 30 are preferably of low mass to minimise the effects of gravity and inertia. The pivot points of plates 20 and 30 are preferably as close as possible to the edges of tape 11 to minimise the torque on the plates due to the drag of the edges of tape 11.

Such tape guides 1 may be used in a magnetic tape drive (Figure 3). Tape 11 is maintained adjacent a magnetic tape head 50 by two gimbaled, compliant guides 1 including two arcuate tape bearing posts 10. Head 50 and/or guides 1 may be located on either side of tape 11 so long as head 50 is between guides 1 along the tape path (i.e. the direction of tape movement). Guides 1 are as previously described but are shown in less detail for simplicity. Tape reels 51 and 52 provide for the supply and storage of tape 11 as it moves, depending upon the direction of such movement. Controller 53 is connected to head 50 and reels 51 and 52 to control tape movement and head operations to allow for writing to and reading from tape 11, as is known. The connections to controller 53 are not shown for simplicity, but are also known.

The tape drive and tape cartridge can be arranged in different configurations. In one configuration, reels 51 and 52 are part of a tape cartridge and guides 1, head 50 and controller 53 are part of a tape drive in which the cartridge is mounted. In another configuration, one of the tape reels is included in the tape drive, as in the IBM 3480/3490 tape drives. In still another configuration guides 1 are included in the tape cartridge.

While the invention has been shown and described with reference to a preferred embodiment thereof, it will be understood by those skilled in the art that various changes in form and detail may be made therein without departing from the scope of the invention as defined in the appended claims. For example, any number of gimbaled, compliant guides may be used to guide a tape, as required. The two plates of a guide need not be of the same shape. Leaf spring 22 may be replaced by gravity, electromechanical, or other compliant means. Furthermore, the tape need not be magnetic tape but may be any moving flexible web. Accordingly, the invention disclosed herein is to be limited only as specified in the following claims.

## Claims

1. A guide (1) for a flexible moving web (11), comprising an arcuate web bearing surface (10) having a first edge, a first plate (20) pivotably mounted adjacent the first edge of the web bearing surface, means (21, 22) for applying force upon the first plate (20) in a direction substantially perpendicular to the plane defined by the arc of the edge of the web (11), characterized in that
the first plate (20) is pivotally mounted on the means (21, 22) for applying force upon the first plate (20), whereby the first plate (20) pivots about a point moveable in a direction substantially perpendicular to the plane defined by the arc of the edge of the web (11).

2. A guide according to claim 1, wherein the means for applying force upon the first plate is a leaf spring (22).

3. A guide according to claim 1 or 2, wherein the first plate (20) pivots with two degrees of freedom to remain substantially parallel to the plane defined by the arc of the edge of the web (11).

4. A guide according to claim 3, wherein the first plate is constrained from rotating in the plane defined by the arc of the edge of the web.

5. A guide according to claim 1, 2, 3 or 4, wherein the first plate (20) pivots at the centroid of the arc of contact between the plate (20) and the web (11).

6. A guide according to any preceding claim, including a second plate (30) pivotably mounted adjacent a second edge of the web bearing surface (10).

7. A guide according to claim 6, wherein the second plate (30) pivots with two degrees of freedom to remain substantially parallel to the plane defined by the arc of the edge of the web (11).

8. A guide according to claim 6 or 7, wherein the first and second plates (20, 30) are substantially parallel.

9. A guide according to claims 6, 7 or 8, wherein the second plate (30) is constrained from rotating in the plane defined by the arc of the edge of the web (11).

10. A guide according to claim 6, 7, 8 or 9, wherein the second plate (30) pivots at the centroid of the arc of contact between the plate (30) and the web (11).

11. A tape path comprising a first and a second rotatable reel (51, 52), a flexible tape (11) having its first end wound upon the first rotatable reel (51) and its second end wound upon the second rotatable reel (52), and a guide (1) according to any preceding claim, along the length of the tape.

12. A tape drive comprising a first and a second rotatable reel (51, 52), a flexible tape (11) having its first end wound upon the first rotatable reel (51) and its second end wound upon the second rotatable reel (52), a read/write head (50) adjacent the tape, means coupled to the rotatable reels for controllably rotating the rotatable reels to advance the tape past the head (50), means coupled to the head for controllably writing to and reading from the tape (11), first and a second guides (1), one guide on each side of the head along the length of the tape, at least one of the guides being according to any of claims 1 to 10.

## Patentansprüche

1. Eine Führung (1) für eine bewegliche, flexible Bahn (11), umfassend eine gekrümmte Bahnlagerfläche (10) mit einer ersten Kante, eine erste Scheibe (20), die angrenzend an die erste Kante der Bahnlagerfläche schwenkbar befestigt ist, Mittel (21, 22), um auf die erste Scheibe (20) in einer im wesentlichen senkrecht zu der durch den Bogen der Kante der Bahn (11) definierten Ebene eine Kraft anzuwenden, dadurch gekennzeichnet, daß
die erste Scheibe (20) auf dem Mittel (21, 22) schwenkbar befestigt ist, um eine Kraft auf die erste Scheibe (20) anzuwenden, wodurch die erste Scheibe (20) sich um einen Punkt dreht, der in einer im wesentlichen senkrecht zu der durch den Bogen der Kante der Bahn (11) definierten Ebene beweglich ist.

2. Eine Führung nach Anspruch 1, bei der das Mittel zum Anwenden einer Kraft auf die erste Scheibe eine Blattfeder (22) ist.

3. Eine Führung nach Anspruch 1 oder 2, bei der die erste Scheibe (20) mit zwei Freiheitsgraden schwenkbar ist, um im wesentlichen parallel zu der Ebene zu bleiben, die von dem Bogen der Kante der Bahn (11) definiert wird.

4. Eine Führung nach Anspruch 3, bei der die Drehung der ersten Scheibe in der Ebene, die durch den Bogen der Bahnkante definiert wird, eingeschränkt ist.

5. Eine Führung nach Anspruch 1, 2, 3 oder 4, bei der die erste Scheibe (20) am Schwerpunkt des Kontaktbogens zwischen der Scheibe (20) und der Bahn (11) schwenkbar ist.

6. Eine Führung nach einem der vorangehenden Ansprüche, eine zweite Scheibe (30) umfassend, die angrenzend an eine zweite Kante der Bahnlagerfläche (10) schwenkbar angebracht ist.

7. Eine Führung nach Anspruch 6, bei der die zweite Scheibe (30) mit zwei Freiheitsgraden schwenkbar ist, um im wesentlichen parallel zu der Ebene zu bleiben, die von dem Bogen der Kante der Bahn (11) definiert wird.

8. Eine Führung nach Anspruch 6 oder 7, bei der die erste und die zweite Scheibe (20, 30) im wesentlichen parallel sind.

9. Eine Führung nach Anspruch 6, 7 oder 8, bei der die Drehung der zweiten Scheibe (30) in der Ebene, die von dem Bogen der Kante der Bahn (11) definiert wird, begrenzt ist.

10. Eine Führung nach Anspruch 6, 7, 8 oder 9, bei der die zweite Scheibe (30) am zweiten Schwerpunkt des Kontaktbogens zwischen der Scheibe (30) und der Bahn (11) schwenkbar ist.

11. Ein Bandpfad, eine erste und eine zweite drehbare Spule (51,52) umfassend, ein flexibles Band (11), dessen erstes Ende um die erste drehbare Spule (51) gewickelt ist, und dessen zweites Ende um die zweite drehbare Spule (52) gewickelt ist, und eine Führung (1) nach einem der vorangehenden Ansprüche entlang der Bandlänge.

12. Ein Bandlaufwerk, umfassend eine erste und eine zweite drehbare Spule (51, 52), ein flexibles Band (11), dessen erstes Ende um die erste drehbare Spule (51) gewickelt ist, und dessen zweites Ende um die zweite drehbare Spule (52) gewickelt ist, einen Schreib-/Lesekopf (50), der an das Band angrenzt, mit den drehbaren Spulen gekoppelte Mittel, um die Spulendrehung zu regeln, so daß sie das Band an dem Kopf (50) vorbeiführen, mit dem Kopf gekoppelte Mittel, um kontrolliert auf das Band (11) zu schreiben beziehungsweise von diesem zu lesen, erste und zweite Führungen (1), jeweils eine Führung auf jeder Seite des Kopfes entlang der Bandlänge, wobei mindestens eine der Führungen einem der Ansprüche 1 bis 10 entspricht.

## Revendications

1. Guide (1) pour une bande flexible et mobile (11), comprenant une surface (10) d'appui de bande en forme d'arc ayant un premier bord, un premier plateau (20) monté de manière à pouvoir pivoter à côté du premier bord de la surface d'appui de la bande, des dispositifs (21, 22) servant à appliquer une force sur le premier plateau (20) suivant une direction quasiment perpendiculaire au plan défini par l'arc du bord de la bande (11), caractérisé en ce que
le premier plateau (20) est monté, de manière à pouvoir pivoter, sur les dispositifs (21, 22) servant à appliquer une force sur le premier plateau (20), par quoi le premier plateau (20) pivote autour d'un point mobile suivant une direction quasiment perpendiculaire au plan défini par l'arc du bord de la bande (11).

2. Guide conforme à la revendication 1, dans lequel le dispositif d'application d'une force sur le premier plateau est un ressort à lames (22).

3. Guide conforme à la revendication 1 ou 2, dans lequel le premier plateau (20) pivote avec une marge de deux degrés afin de rester quasiment parallèle au plan défini par l'arc du bord de la bande (11).

4. Guide conforme à la revendication 3, dans lequel on empêche le premier plateau de tourner dans le plan défini par l'arc du bord de la bande.

5. Guide conforme à la revendication 1, 2, 3 ou 4, dans lequel le premier plateau (20) pivote sur le centre de gravité de l'arc du contact entre le plateau (20) et la bande (11).

6. Guide conforme à l'une quelconque des revendications précédentes, comprenant un second plateau (30) monté de manière à pouvoir pivoter et contigu à un second bord de la surface d'appui de la bande (11).

7. Guide conforme à la revendication 6, dans lequel le second plateau (30) pivote avec un jeu de deux degrés de manière à rester pratiquement parallèle au plan défini par l'arc du bord de la bande (11).

8. Guide conforme à la revendication 6 ou 7, dans lequel les premier et second plateaux (20, 30) sont quasiment parallèles l'un à l'autre.

9. Guide conforme à la revendication 6, 7 ou 8, dans lequel on empêche le second plateau (30) de tourner dans le plan défini par l'arc du bord de la bande (11).

10. Guide conforme à la revendication 6, 7, 8 ou 9, dans lequel le second plateau (30) pivote au centre de gravité de l'arc du contact entre le plateau (30) et la bande (11).

11. Chemin de bande comprenant une première et une seconde bobines (51, 52) mobiles autour d'axes, une bande flexible (11) dont la première extrémité s'enroule sur la première bobine rotative (51) et dont la seconde extrémité s'enroule sur la seconde bobine rotative (52), et un guide (1) conforme à l'une quelconque des revendications précédentes, sur la longueur de la bande.

12. Mécanisme d'entraînement de bande comprenant une première et une seconde bobines rotatives (51, 52), une bande flexible (11) ayant une première extrémité enroulée sur la première bobine rotative (51) et la seconde extrémité enroulée sur la seconde bobine rotative (52), une tête (50) de lecture-écriture adjacente à la bande, un dispositif couplé aux bobines rotatives pour contrôler la rotation des bobines rotatives afin d'avancer la bande devant la tête (50), un dispositif couplé à la tête pour contrôler l'écriture (sur la bande (11)) et la lecture de la bande (11), un premier et un second guides (1), un guide sur chacun des côtés de la tête le long de la bande, l'un au moins des guides étant conforme à l'une quelconques des revendications 1 à 10.
